# EUROPÄISCHE PATENTSCHRIFT

(11) **EP 1 310 150 B1**
(45) Veröffentlichungstag und Bekanntmachung des Hinweises auf die Patenterteilung: **15.03.2006**
(21) Anmeldenummer: 02450247.8
(22) Anmeldetag: 30.10.2002
(51) Int. Cl.: A01D 57/02

(54) **Haspelantrieb**
Header reel drive
Entraînement de rabatteur

(30) Priorität: 09.11.2001 AT 17712001
(43) Veröffentlichungstag der Anmeldung: 14.05.2003
(73) Patentinhaber: Schrattenecker, Franz, A-4773 Eggerding (AT)
(72) Erfinder: Schrattenecker, Franz, A-4773 Eggerding (AT)
(74) Vertreter: Hübscher, Helmut

(56) Entgegenhaltungen:
- DE-B- 1 297 391
- GB-A- 2 332 132
- DATABASE WPI Section PQ, Week 198748 Derwent Publications Ltd., London, GB; Class P12, AN 1987-340454 XP002226264 & SU 1 304 778 A (AGRIC EQUIP RES COM), 23. April 1987 (1987-04-23)
- DATABASE WPI Section PQ, Week 199018 Derwent Publications Ltd., London, GB; Class P12, AN 1990-138037 XP002226265 & SU 1 516 052 A (AGRIC EQUIP PROD), 15. Oktober 1989 (1989-10-15)
- DATABASE WPI Section PQ, Week 199034 Derwent Publications Ltd., London, GB; Class P12, AN 1990-258795 XP002226266 & SU 1 537 176 A (AGRIC EQUIP CONS AS), 23. Januar 1990 (1990-01-23)

## Beschreibung

Die Erfindung bezieht sich auf eine Erntemaschine, insbesondere Mähdrescher, mit einer zwischen Tragarmen drehbar gelagerten Einzugshaspel, mit einem zwischen den Tragarmen angeordneten, sich an wenigstens einem Tragarm über eine Lagerachse drehfest abstützenden Motor für den Antrieb der Einzugshaspel und mit einem mit der Einzugshaspel drehfest verbundenen, koaxial zur Drehachse der Einzugshaspel angeordneten Zahnkranz mit Innenverzahnung.

Bei einer derartigen bekannten Erntemaschine (SU 1 304 778 A) ist der Antrieb koaxial zur Drehachse und innerhalb des Tragrohres der Einzugshaspel angeordnet, wobei allerdings der Antrieb zu einem wesentlichen Anteil seitlich neben der Einzugshaspel angeordnet ist. Aus der EP 11 33 912 A und der DE 195 08 887 C sind Riemen- oder Kettentriebe für Einzugshaspeln bekannt, die gänzlich seitlich der Einzugshaspel angeordnet sind. Der Antrieb der Einzugshaspel erfolgt entweder direkt von der Erntemaschine her über eine mechanische Antriebsverbindung oder über einen von der Erntemaschine hydraulisch angetriebenen Hydromotor. Nachteilig ist dabei allerdings stets, daß die für den Antrieb der Einzugshaspel notwendigen Antriebsmittel außerhalb der Einzugshaspel angeordnet sind, was die Baubreite der Erntemaschine vergrößert und bei verschiedenen Getreidearten zu Verstopfungen bzw. zu Störungen der Antriebsmittel führt. Dadurch wird einerseits die Fahrgeschwindigkeit der Erntemaschine beeinträchtigt und anderseits die Verfügbarkeit aufgrund der erhöhten Störanfälligkeit verringert.

Der Erfindung liegt daher die Aufgabe zugrunde eine Erntemaschine der eingangs geschilderten Art zu schaffen, bei der Verstopfungen bzw. Störungen durch Erntegut im Bereich des Haspelantriebes sicher vermieden werden und die ohne die Einzugshaspelbreite überragende Antriebsmittel für die Einzugshaspel auskommt.

Die Erfindung löst diese Aufgabe dadurch, daß der Antrieb innerhalb der Einzugshaspel in einem Gehäuse angeordnet ist, daß der Motor mit einem Antriebszahnrad in die dem Gehäuse zugeordnete Innenverzahnung eingreift oder mit dieser zu einem Planetentrieb ausgebildet ist und daß das Gehäuse und die Innenverzahnung eine Baueinheit bilden, an die ein zur Drehachse der Einzugshaspel koaxiales Tragrohr angeformt ist.

Besonders vorteilhafte Konstruktionsverhältnisse ergeben sich, wenn der Antrieb einen mit der Einzugshaspel drehfest verbundenen, koaxial zur Drehachse der Einzugshaspel angeordneten Zahnkranz mit Innenverzahnung, einen sich an wenigstens einem Tragarm über eine Lagerachse drehfest abstützenden Motor für den Antrieb der Einzugshaspel und ein Gehäuse umfaßt, wobei der Motor mit einem Antriebszahnrad in die Innenverzahnung eingreift oder mit dieser zu einem Planetentrieb ausgebildet ist. Die Antriebseinheit aus Zahnkranz und Motor ist dabei innerhalb der Einzugshaspel im Gehäuse angeordnet. Das Gehäuse kann die Antriebseinheit vollkommen oder nur teilweise umschließen, soll aber in jedem Fall das Mähgut von der Antriebseinheit fernhalten und somit einen störungsfreien Betrieb der Einzugshaspel sicherstellen. Der Motor stützt sich drehfest auf der Lagerachse ab, welche Lagerachse wiederum drehfest am Tragarm befestigt ist und das bzw. die Lager für die Haspellagerung trägt. Durch diese Maßnahmen wird eine einfache Antriebseinheit mit geringen Abmaßen geschaffen, die alle an eine Einzugshaspel gestellten Anforderungen erfüllt.

Um die Antriebskräfte sicher vom Motor auf die Einzugshaspel übertragen zu können, bilden das Gehäuse und die Innenverzahnung eine Baueinheit, an die ein zur Drehachse der Einzugshaspel koaxiales Tragrohr angeformt ist. Die Antriebskräfte werden zunächst vom Motor über die Innenverzahnung auf das Gehäuse und anschließend an das Tragrohr weitergeleitet, wodurch die Einzugshaspel in Bewegung gesetzt wird. Die Einzugshaspel ist beispielsweise in üblicher Weise am Tragrohr mittels Speichen angehängt bzw. befestigt. Eine gute und stabile Abstützung der Einzugshaspel am der Lagerachse zugehörigen Tragarm ergibt sich, wenn die Einzugshaspel und/oder das Tragrohr drehbar auf der Lagerachse gelagert sind. Die drehbare Lagerung der Einzugshaspel gegenüber der Lagerachse könnte aber auch über einen Planetentrieb erfolgen, wobei die Aufgabe der Lager dann von den Planetenrädern übernommen wird. Als Antrieb ist je nach Bedarf entweder ein hydraulischer oder ein elektrischer Motor vorgesehen. Dies ist deshalb von besonderem Vorteil, da die Versorgungsleitungen für diese Motoren besonders einfach und ohne die Baubreite der Erntemaschine zu erhöhen, verlegt werden können.

In der Zeichnung ist der Erfindungsgegenstand beispielsweise schematisch veranschaulicht. Es zeigen:

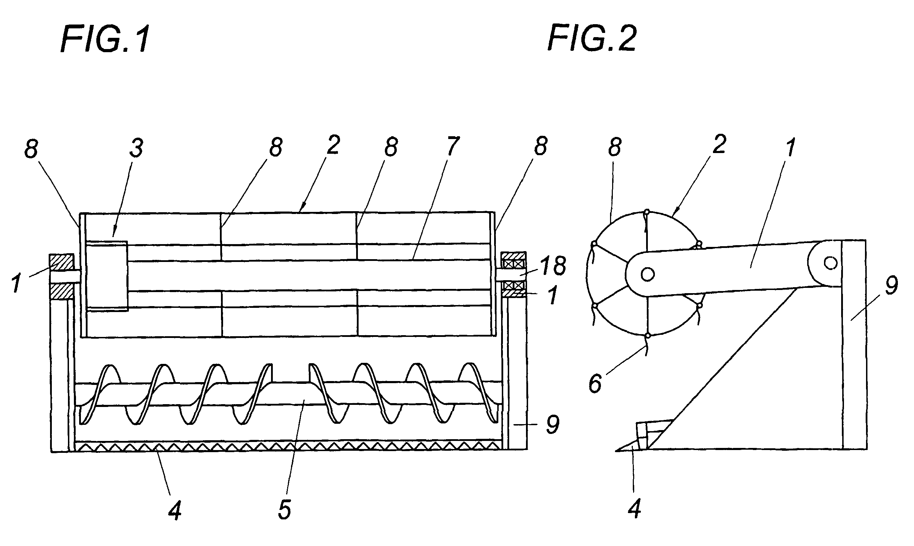

- Fig. 1: ein Mähwerk einer nicht näher dargestellten erfindungsgemäßen Erntemaschine in teilgeschnittener Vorderansicht,
- Fig. 2: das Mähwerk aus Fig. 1 in Seitenansicht und
- Fig. 3 und 4: zwei Ausgestaltungsvarianten für den Einzugshaspelantrieb in teilgeschnittener Ansicht und in vergrößertem Maßstab.

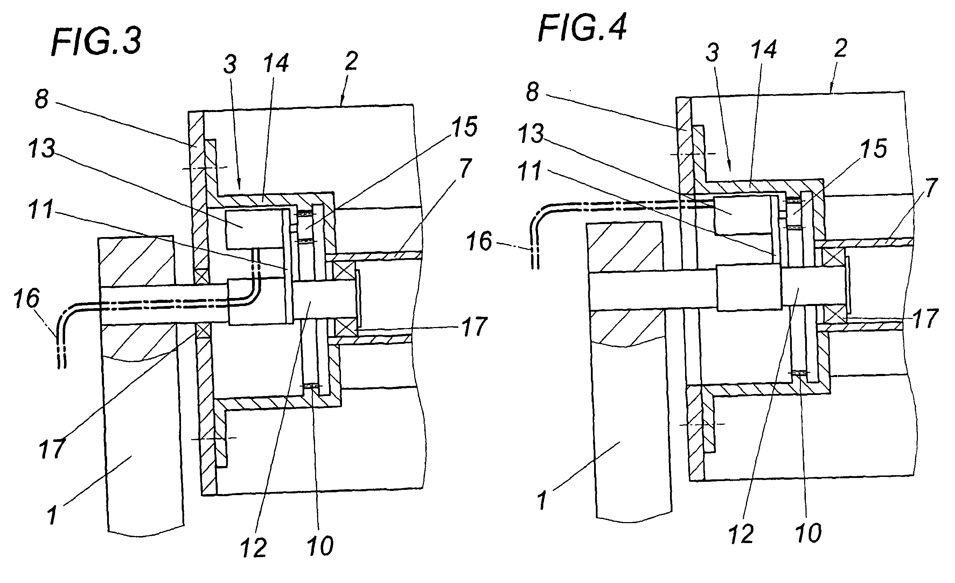

Eine nicht näher dargestellte Erntemaschine besitzt eine zwischen zwei Tragarmen 1 drehbar gelagerte Einzugshaspel 2, einen Antrieb 3 für die Einzugshaspel 2, einen Mähbalken 4 und eine Einzugsschnecke 5 für das geerntete Mähgut. Die Einzugshaspel 2 trägt in üblicher Weise eine Vielzahl von Haspelzinken 6, die gleichmäßig verteilt am Umfang der Einzugshaspel 2 angeordnet sind und besitzt ein Tragrohr 7, sowie mehrere Abstandselemente 8, welche für die Stabilität der Einzugshaspel 2 sorgen. Die Einzugshaspel 2 ist mit den Tragarmen 1 schwenkbar an einem Schneidwerksrahmen 9 angelenkt. Die Einzugshaspel 2 kann nicht nur radial um die Drehachse der Tragarme 1, sondern auch axial verstellbar sein. Der Abstand zwischen dem Drehpunkt der Einzugshaspel 2 und dem Drehpunkt der Tragarme 1 kann somit beliebig verändert werden. Der Antrieb 3 ist innerhalb der Einzugshaspel 2 angeordnet und umfaßt einen mit der Einzugshaspel 2 drehfest verbundenen, koaxial zur Drehachse der Einzugshaspel 2 angeordneten Zahnkranz 10 mit einer Innenverzahnung, einen sich an wenigstens einem Tragarm 1 abstützenden Motor 13 für den Antrieb 3 der Einzugshaspel 2 und ein Gehäuse 14. Das Gehäuse 14 ist mit einem Abstandselement 8 verschraubt. Der Motor 13 ist einerseits mit einem Halteelement 11 an der drehfest im Tragarm 1 sitzenden Lagerachse 12 befestigt, und greift anderseits mit einem Antriebszahnrad 15 in die Innenverzahnung des Zahnkranzes 10 ein, womit er für den Antrieb der Einzugshaspel 2 sorgt. Das Gehäuse 14 und der Zahnkranz 10 mit der Innenverzahnung bilden eine Baueinheit, an die das zur Drehachse der Einzugshaspel 2 koaxiale Tragrohr 7 angeformt ist. Entweder sind die Einzugshaspel 2 und das Tragrohr 7 drehbar auf der Lagerachse 12 gelagert (Fig. 3) oder es ist lediglich das Tragrohr 7 drehbar auf der Lagerachse 12 gelagert (Fig. 4). Als Motor 13 ist ein hydraulischer oder ein elektrischer Motor vorgesehen, dessen Versorgungsleitungen 16 entweder durch die Lagerachse 12 aus der Einzugshaspel 2 herausgeführt (Fig.3) oder aber direkt aus dem Gehäuse 14 nach außen abgeleitet werden (Fig. 4). Zum Antrieb der Einzugshaspel wird der Motor mit elektrischer oder hydraulischer Energie versorgt, worauf dieser die Einzugshaspel mit der gewünschten Drehzahl in Drehung versetzt. Die Einzugshaspel 2 stützt sich einerends, wie bereits erwähnt, über wenigstens ein Lager 17 an der Lagerachse 12 ab und ist an ihrem anderen Ende mit einem Wellenstummel 18 im zweiten Tragarm gelagert.

## Patentansprüche

1. Erntemaschine, insbesondere Mähdrescher, mit einer zwischen Tragarmen (1) drehbar gelagerten Einzugshaspel (2), mit einem zwischen den Tragarmen angeordneten, sich an wenigstens einem Tragarm (1) über eine Lagerachse (12) drehfest abstützenden Motor (13) für den Antrieb (3) der Einzugshaspel (2) und mit einem mit der Einzugshaspel (2) drehfest verbundenen, koaxial zur Drehachse der Einzugshaspel (2) angeordneten Zahnkranz (10) mit Innenverzahnung, **dadurch gekennzeichnet, daß** der Antrieb (3) innerhalb der Einzugshaspel (2) in einem Gehäuse (14) angeordnet ist, daß der Motor (13) mit einem Antriebszahnrad (15) in die dem Gehäuse (14) zugeordnete Innenverzahnung eingreift oder mit dieser zu einem Planetentrieb ausgebildet ist und daß das Gehäuse (14) und die Innenverzahnung eine Baueinheit bilden, an die ein zur Drehachse der Einzugshaspel (2) koaxiales Tragrohr (7) angeformt ist.

2. Erntemaschine nach Anspruch 1, **dadurch gekennzeichnet, daß** die Einzugshaspel (2) und/oder das Tragrohr (7) drehbar auf der das Gehäuse (14) durchragenden Lagerachse (12) gelagert sind.

3. Erntemaschine nach Anspruch 1 oder 2, **dadurch gekennzeichnet, daß** als Antrieb ein hydraulischer Motor vorgesehen ist.

4. Erntemaschine nach Anspruch 1 oder 2, **dadurch gekennzeichnet, daß**, daß als Antrieb ein elektrischer Motor vorgesehen ist.

## Claims

1. A harvesting machine, particularly a thresher, comprising a feeding header reel (2) which is rotatably mounted between support arms (1), a motor (13) for the drive (3) of the feeding header reel (2) supported in a rotationally secure way via a bearing axis (12) on at least one support arm (1) and a ring gear (10) connected in a rotationally secure way to the feeding header reel (2) and disposed coaxially with the rotation axis of the feeding header reel (2), having inner toothing, **characterised in that** the drive (3) is disposed within the feeding header reel (2) in a housing (14), **in that** the motor (13) engages with a drive pinion (15) in the inner toothing assigned to the housing (14) or is formed therewith as a planetary drive and **in that** the housing (14) and the inner toothing form a structural unit on which a support pipe (7) coaxial with the rotation axis of the feeding header reel (2) is formed.

2. A harvesting machine according to claim 1, **characterised in that** the feeding header reel (2) and / or the support pipe (7) are rotatably mounted on the bearing axis (12) projecting through the housing (14).

3. A harvesting machine according to claim 1 or 2, **characterised in that** a hydraulic motor is provided as a drive.

4. A harvesting machine according to claim 1 or 2, **characterised in that** an electric motor is provided as a drive.

## Revendications

1. Machine à récolter, en particulier, moissonneuse-batteuse avec un rabatteur d'introduction (2), monté à rotation entre des bras support (1), avec un moteur (13) disposé entre les bras support, soutenant, de façon assujettie à rotation, en au moins un bras support (1), par l'intermédiaire d'un axe de palier (12), pour l'entraînement (3) du rabatteur d'introduction (2), et avec une couronne dentée (10), reliée de façon assujettie en rotation au rabatteur d'introduction (2) et disposée coaxialement par rapport à l'axe de rotation du rabatteur d'introduction (2), la couronne dentée étant munie d'une denture intérieure, **caractérisée en ce que** l'entraînement (3) est disposé à l'intérieur du rabatteur d'introduction 2), dans un boîtier (14), **en ce que** le moteur (13) s'engrène, par une roue dentée d'entraînement (15), dans la denture intérieure associée au boîtier (14) ou est réalisé en formant une transmission planétaire avec celle-ci, et **en ce que** le boîtier (14) et la denture intérieure forment une unité de construction, sur laquelle un tube support (7), coaxial à l'axe de rotation du rabatteur d'introduction (2), est formé d'un seul tenant.

2. Machine à récolter selon la revendication 1, **caractérisée en ce que** le rabatteur d'introduction (2) et/ou le tube support (7) est/sont monté(s) à rotation sur l'axe de palier (12) traversant le boîtier (14).

3. Machine à récolter selon la revendication 1 ou 2, **caractérisée en ce qu'**un moteur hydraulique est prévu en tant qu'entraînement

4. Machine à récolter selon la revendication 1 ou 2, **caractérisée en ce qu'**un moteur électrique est prévu en tant qu'entraînement.
